# EUROPEAN PATENT APPLICATION

(11) **EP 2 685 674 A2**
(43) Date of publication of application: **15.01.2014**
(21) Application number: 11758841.8
(22) Date of filing: 29.04.2011
(51) Int. Cl.: H04L 12/56

(54) **ROUTE UPDATE METHOD AND ROUTER**

(71) Applicant: Huawei Technologies Co., Ltd., Shenzhen, Guangdong 518129 (CN)
(72) Inventor: CHEN, Shuanglong, Shenzhen Guangdong 518129 (CN)
(74) Representative: Epping - Hermann - Fischer
(86) International application number: PCT/CN2011/073579
(87) International publication number: WO 2011/116731

(57) **Abstract**

Embodiments of the present invention provide a route updating method, including: receiving a first route message to a first destination which is advertised by a first router, where the first route message includes a first route priority; receiving a second route message to the first destination which is advertised by a second router, where the second route message includes a second route priority; selecting a route corresponding to a higher route priority between the first route priority and the second route priority as a forwarding route (203); where, the first router and the second router form a router backup group by means of a virtual router redundancy protocol; under a condition that the first router is a master router and the second router is a backup router, the first route priority is higher than the second route priority. In addition, embodiments of the present invention also provide a corresponding router. By utilizing the route updating method and the router provided in embodiments of the present invention, it may be ensured that a provider edge device timely senses a fault between a remote provider edge device and a customer edge device connected to the remote provider edge device.

## Description

### TECHNICAL FIELD

The present invention relates to the field of communications, and in particular, to a route updating method and a router.

### BACKGROUND

Routers are extensively applied on a network. After a packet arrives at a router, a next hop is determined according to a routing and forwarding table of the router, and then the packet arrives at a destination in this way. Therefore, when a router on the network fails, a correct routing and forwarding table must be maintained timely. This is vital to ensure that the packet reaches the destination timely and accurately.

In the prior art, a correct routing and forwarding table is maintained by using static routing and dynamic routing. Static routing needs to be set manually, and it is difficult to maintain the correct routing and forwarding table timely by using static routing. Dynamic routing, for example, border gateway protocol (Border Gateway Protocol, BGP), can find, by using a link fault detection mechanism, whether a directly connected router is reachable.

During the study of the prior art, the inventor discovers the following problems:

A provider edge device cannot timely sense a fault between a remote provider edge device and a customer edge device connected to the remote provider edge device.

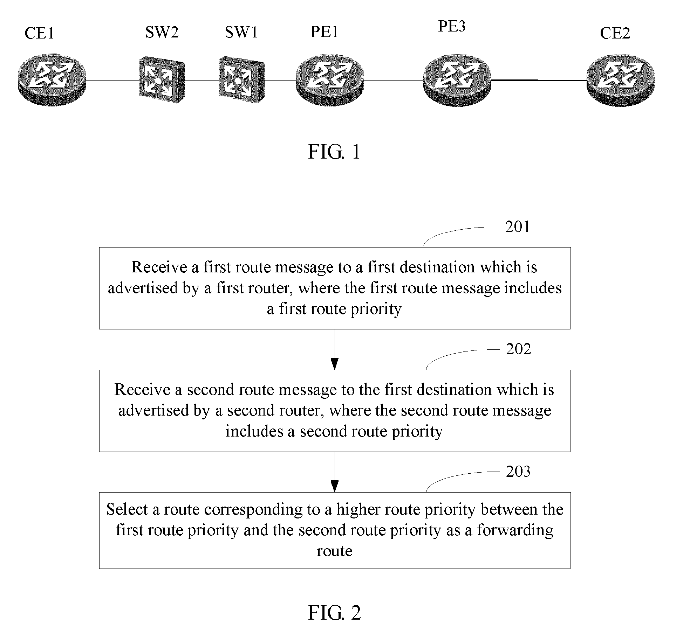

Using FIG. 1 as an example, a provider edge device (Provider Edge, PE) 3 cannot timely sense a fault between a PE1 and a customer edge device (Customer Edge, CE) CE1 connected to the PE1. For example, the PE1 cannot timely sense a fault of a switch (Switch, SW) 2 or a link fault between the SW2 and an SW1.

The PE1, PE3, CE1, and CE2 are routers or network devices with a routing function. The SW1 and SW2 are switches or network devices with a switching function.

### SUMMARY

In one aspect, a route updating method is provided to ensure that a provider edge device can timely sense a fault between a remote provider edge device and a customer edge device connected to the remote provider edge device.

A route updating method includes:
receiving a first route message to a first destination which is advertised by a first router, where the first route message includes a first route priority;
receiving a second route message to the first destination which is advertised by a second router, where the second route message includes a second route priority; and
selecting a route corresponding to a higher route priority between the first route priority and the second route priority as a forwarding route;
where, the first router and the second router form a router backup group by means of virtual router redundancy protocol VRRP protocol; under a condition that the first router is a master router and the second router is a backup router, the first route priority is higher than the second route priority.

In another aspect, a router is provided to ensure that a provider edge device can timely sense a fault between a remote provider edge device and a customer edge device connected to the remote provider edge device.

A router includes:
a route message receiving unit, configured to receive a first route message to a first destination which is advertised by a first router, where the first route message includes a first route priority; and receive a second route message to the first destination which is advertised by a second router, where the second route message includes a second route priority; and
a forwarding route selecting unit, configured to select a route corresponding to a higher route priority between the first route priority and the second route priority as a forwarding route;
where, the first router and the second router form a router backup group by means of VRRP protocol; when the first router is a master router and the second router is a backup router, the first route priority is higher than the second route priority.

Evidently, by using the provided route updating method and router, it may be ensured that a provider edge device can timely sense a fault between a remote provider edge device and a customer edge device connected to the remote provider edge device.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a network topology formed by several network devices in the prior art;
FIG. 2 is a flowchart of a route updating method according to an embodiment of the present invention;
FIG. 3 is a flowchart of associating VRRP with a priority of an advertised route by a first router according to an embodiment of the present invention;
FIG. 4 is a flowchart of associating VRRP with a priority of an advertised route by a second router according to an embodiment of the present invention;
FIG. 5 is a schematic diagram of a route message advertised by a router backup group to a neighboring router according to an embodiment of the present invention;
FIG. 6 is a schematic diagram of a router according to an embodiment of the present invention; and
FIG. 7 illustrates a specific implementation of obtaining a fault between a remote router and a network device connected to the remote router by the remote router by means of VRRP protocol according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

FIG. 2 is a flowchart of a route updating method according to an embodiment of the present invention. Specifically, the following content is included:
201. Receive a first route message to a first destination which is advertised by a first router, where the first route message includes a first route priority. The first router is a master router, and the first router and the second router form a router backup group by means of VRRP protocol. A priority of the route to the first destination which is advertised by the first router is higher than a priority of the route to the first destination which is advertised by the second router.

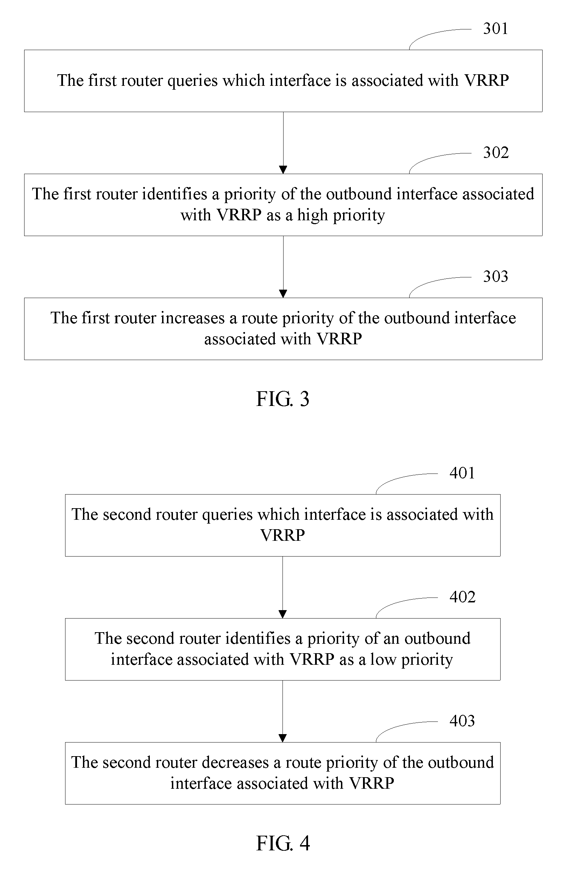

With respect to how to make the priority of the route to the first destination which is advertised by the first router, to be higher than the priority of the route to the first destination which is advertised by the second router to a neighboring router, the following manners may be used (for details, referring to FIG. 3):
301. The first router queries which interface is associated with VRRP. The first router may have multiple outbound interfaces, some of which may be associated with VRRP and others may not be associated with VRRP. In addition, there may be multiple types of outbound interfaces, and a type of an outbound interface may be related to a network where the first router works. For example, if the first router works on a virtual private network (Virtual Private Network, VPN), an outbound interface of the first router is a VPN outbound interface.
302. The first router identifies a priority of the outbound interface associated with VRRP as a high priority. During a specific implementation, multiple identification methods may be available. For example, the first router records the priority of the outbound interface associated with VRRP as "1". "1"indicates that the priority of the outbound interface is high, and "0" indicates that a priority of an outbound interface is low.
303. The first router increases a route priority of the outbound interface associated with VRRP. Increasing, by the first router, the route priority of the outbound interface associated with VRRP may be implemented by using the following solutions. For example, the route priority is adjusted by modifying a local preference (Local_Pref) attribute. Details are as follows: Before advertising the neighboring router of a route message to the first destination, the first router checks the route to the first destination. According to 302, the first router may find that the priority of the outbound interface of the route is already identified as a high priority. Then, the first router adjusts the Local_Pref attribute of the route to the first destination to a high value (higher than a value of the Local_Pref attribute of a route to the first destination advertised by the second router).
202. Receive a second route message to the first destination which is advertised by a second router, where the second route message includes a second route priority. The second router is a backup router, and the first router and the second router form a router backup group by means of VRRP protocol. The priority of the route to the first destination which is advertised by the second router is lower than the priority of the route to the first destination which is advertised by the first router to a neighboring router.

With respect to how to make the priority of the route to the first destination which is advertised by the second router, to be lower than the priority of the route to the first destination which is advertised by the first router to a neighboring router, the following manners may be used (for details, referring to FIG. 4):
401. The second router queries which interface is associated with VRRP. The second router may have multiple outbound interfaces, some of which may be associated with VRRP and others may not be associated with VRRP. In addition, there may be multiple types of outbound interfaces, and a type of an outbound interface may be related to a network where the second router works. For example, if the second router works on a VPN network, an outbound interface of the second router is a VPN outbound interface.
402. The second router identifies a priority of an outbound interface associated with VRRP as a low priority. During a specific implementation, multiple identification methods may be available. For example, the second router records the priority of the outbound interface associated with VRRP as "0". "1"indicates that a priority of an outbound interface is high, and "0" indicates that a priority of an outbound interface is low.
403. The second router decreases a route priority of the outbound interface associated with VRRP. Decreasing, by the second router, the route priority of the outbound interface associated with VRRP may be implemented by using the following solutions. For example, the route priority is adjusted by modifying a local Local_Pref attribute. Details are as follows: Before advertising the neighboring router of a route message to the first destination, the second router first checks the route to the first destination. According to 402, the second router may find that the priority of the outbound interface of the route is already identified as a low priority. Then, the second router adjusts the Local_Pref attribute of the route to the first destination to a low value (lower than the value of the Local_Pref attribute of the route to the first destination advertised by the first router).
203. Select a route corresponding to a higher route priority between the first route priority and the second route priority as a forwarding route. With respect to the specific implementation of selecting a route corresponding to a higher route priority between the first route priority and the second route priority as a forwarding route, multiple manners may be available. For example, a route with a higher priority may be selected as the forwarding route according to a route selection policy specified in a routing protocol. When there are multiple routes to the first destination, BGP protocol specifies a series of route selection policies. For details, reference may be made to RFC4271. The following uses BGP route selection policies as an example: A BGP route selection policy corresponding to the Local_Pref attribute is as follows: A route with a highest Local_Pref attribute is selected preferentially. A BGP route selection policy corresponding to an AS_Path attribute is as follows: A route with the smallest count of AS numbers (that is, the shortest AS_Path) in the AS_Path attribute is selected preferentially. Therefore, when other route attributes are the same, route selection can be implemented only according to Local_Pref attributes or only according to AS_Path attributes. When Local_Pref attributes are also the same, route selection can be implemented according to AS_Path attributes.

After a route with a higher priority (that is, a route advertised by the first router) is selected, the route advertised by the first router is sent to a forwarding table.

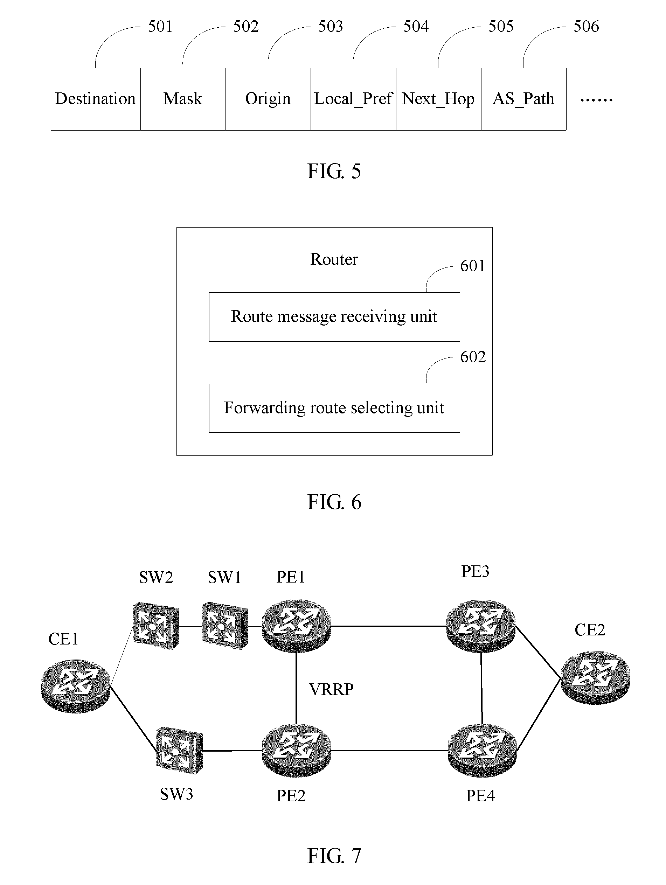

Composition of the route message advertised by the router backup group to the neighboring router may be implemented in multiple manners. FIG. 5 is an implementation manner of a route message advertised by a router backup group to a neighboring router by means of BGP protocol. The route messages advertised by the first router and the second router may have multiple fields, and only some fields are listed in FIG. 5. Details are as follows:
Field 501: Destination attribute, that is, a network address of a destination.
Field 502: Mask attribute, that is, a mask of a destination.
Field 503: Origin attribute. The Origin attribute defines a source of path information and identifies how a route becomes a BGP route.
Field 504: Local_Pref attribute. The Local_Pref attribute is used to determine an optimal route when a packet leaves an autonomous system (Autonomous System, AS). When a BGP router acquires multiple routes whose destination addresses are the same but next hops are different through different IBGP peers, the BGP router may preferentially select a route with a higher Local_Pref attribute.
Field 505: Next_Hop attribute, that is, a next hop.
Field 506: AS_Path attribute. The AS_Path attribute records, according to a vector sequence, all AS numbers that a route needs to pass through from a local address to a destination address.

For details about fields included in a BGP route message and meanings of the fields, reference may be made to RFC4271.

Further, a protocol used by the first route message and the second route message are border gateway protocol BGP protocol.

The first route priority is a first Local_Pref attribute of the first route message.

The second route priority is a second Local_Pref attribute of the second route message.

Selecting a route corresponding to a higher route priority between the first route priority and the second route priority as a forwarding route specifically includes:
selecting a route corresponding to a higher Local_Pref attribute between the first Local_Pref attribute and the second Local_Pref attribute as the forwarding route.

When the first router is the master router and the second router is the backup router, the first Local_Pref attribute is higher than the second Local_Pref attribute.

Further, a protocol used by the first route message and the second route message is BGP.

The first route priority is a first AS_Path attribute of the first route message.

The second route priority is a second AS_Path attribute of the second route message.

Selecting a route corresponding to a higher route priority between the first route priority and the second route priority as a forwarding route specifically includes:
selecting a route corresponding to a smaller count of AS numbers between a count of first AS numbers of the first AS_Path attribute and a count of second AS numbers of the second AS_Path attribute as the forwarding route.

When the first router is the master router and the second router is the backup router, the count of first AS numbers is smaller than the count of second AS numbers.

Further, the first route priority further includes a first AS_Path attribute of the first route message.

The second route priority further includes a second AS_Path attribute of the second route message.

Selecting a route corresponding to a higher route priority between the first route priority and the second route priority as a forwarding route further includes:
when the first Local_Pref attribute is equal to the second Local_Pref attribute, selecting a route corresponding to a smaller count of AS numbers between a count of first AS numbers of the first AS_Path attribute and a count of second AS numbers of the second AS_Path attribute as the forwarding route.

When the first router is the master router and the second router is the backup router, the count of first AS numbers is smaller than the count of second AS numbers.

Further, a protocol used by the first route message and the second route message is interior gateway protocol IGP protocol.

The first route priority is a first Cost attribute of the first route message.

The second route priority is a second Cost attribute of the second route message.

Selecting a route corresponding to a higher route priority between the first route priority and the second route priority as a forwarding route specifically includes:
selecting a route corresponding to a higher Cost attribute between the first Cost attribute and the second Cost attribute as the forwarding route.

When the first router is the master router and the second router is the backup router, the first Cost attribute is higher than the second Cost attribute.

Further, IGP is an open shortest path first (open shortest path first, OSPF) protocol or an intermediate system to intermediate system routing protocol (Intermediate System to Intermediate System routing protocol, IS-IS).

FIG. 7 illustrates a specific implementation of obtaining a fault between a remote router and a network device connected to the remote router by the remote router by means of VRRP protocol. In FIG. 7, a provider edge device (Provider Edge, PE) 1, a PE2, a PE3, a PE4, a customer edge device (Customer Edge, CE) 1, and a CE2 are routers or network devices with a routing function. A switch (Switch, SW) 1, an SW2, and an SW3 are switches or network devices with a switching function. Details are as follows:
The PE1 and the PE2 form a router backup group by means of VRRP protocol, where the PE1 is a master router and the PE2 is a backup router. The PE1 can monitor states of all interfaces (including an interface at the left side of the PE1 directly connected to the SW1); when a monitored interface fails, a priority of the PE1 is automatically decreased by a certain value; when the priority of the PE1 is lower than a priority of the PE2, the PE2 serves as the master router. Therefore, when an interface from the PE1 to the SW1 fails, the PE1 serves as the backup router, while the PE2 serves as the master router. A priority of a route to the CE1 which is advertised by the PE2 to the neighboring router PE3 is higher than a priority of a route to the CE1 which is advertised by the PE1 to the PE3.

Evidently, by using the route updating method provided in the embodiment of the present invention, it may be ensured that a provider edge device can timely sense a fault between a remote provider edge device and a customer edge device connected to the remote provider edge device.

In addition, when a switch or a relay exists between the remote provider edge device and the customer edge device, a local provider edge device can sense a fault between the remote provider edge device and the customer edge device more effectively.

### Embodiment 2

FIG. 6 is a schematic diagram of a router according to an embodiment of the present invention. The router provided in this embodiment can be implemented by using the route updating method provided in the embodiment 1. The router specifically includes the following units:
601. A route message receiving unit. The route message receiving unit is configured to receive a first route message to a first destination which is advertised by a first router, where the first route message includes a first route priority; and is configured to receive a second route message to the first destination which is advertised by a second router, where the second route message includes a second route priority.

With respect to how to make a priority of the route to the first destination which is advertised by the first router, to be higher than a priority of the route to the first destination which is advertised by the second router to a neighboring router, the manners provided in the first embodiment may be used. For details, reference may be made to FIG. 3 and related description.

With respect to how to make a priority of the route to the first destination which is advertised by the second router, to be lower than a priority of the route to the first destination which is advertised by the first router to a neighboring router, the manners provided in the first embodiment may be used. For details, reference may be made to FIG. 4 and related description.

602. A forwarding route selecting unit. The forwarding route selecting unit is configured to select a route corresponding to a higher route priority between the first route priority and the second route priority as a forwarding route. With respect to how to select a route with a higher priority as the forwarding route, multiple manners may be available. For example, a route with a higher priority may be selected as the forwarding route according to a route selection policy specified in a routing protocol. When there are multiple routes to the first destination, BGP protocol specifies a series of route selection policies. For details, reference may be made to RFC4271. The following uses BGP route selection policies as an example: A BGP route selection policy corresponding to a Local_Pref attribute is as follows: A route with a highest Local_Pref attribute is selected preferentially. A BGP route selection policy corresponding to an AS_Path attribute is as follows: A route with the smallest count of AS numbers (that is, the shortest AS_Path) in the AS_Path attribute is selected preferentially. Therefore, when other route attributes are the same, route selection can be implemented only according to Local_Pref attributes or only according to AS_Path attributes. When Local_Pref attributes are also the same, route selection can be implemented according to AS_Path attributes.

After a route with a higher priority (that is, a route advertised by the first router) is selected, the route advertised by the first router is sent to the forwarding table.

Further, a protocol used by the first route message and the second route message is BGP protocol.

The first route priority is a first Local_Pref attribute of the first route message.

The second route priority is a second Local_Pref attribute of the second route message.

The forwarding route selecting unit is specifically configured to select a route corresponding to a higher Local_Pref attribute between the first Local_Pref attribute and the second Local_Pref attribute as the forwarding route.

When the first router is a master router and the second router is a backup router, the first Local_Pref attribute is higher than the second Local_Pref attribute.

Further, a protocol used by the first route message and the second route message is BGP protocol.

The first route priority is a first AS_Path attribute of the first route message.

The second route priority is a second AS_Path attribute of the second route message.

The forwarding route selecting unit is specifically configured to select a route corresponding to a smaller count of AS numbers between a count of first AS numbers of the first AS_Path attribute and a count of second AS numbers of the second AS_Path attribute as the forwarding route.

When the first router is the master router and the second router is the backup router, the count of first AS numbers is smaller than the count of second AS numbers.

Further, the first route priority further includes a first AS_Path attribute of the first route message.

The second route priority further includes a second AS_Path attribute of the second route message.

The forwarding route selecting unit is further configured to select a route corresponding to a smaller count of AS numbers between a count of first AS numbers of the first AS_Path attribute and a count of second AS numbers of the second AS_Path attribute as the forwarding route when the first Local_Pref attribute is equal to the second Local_Pref attribute.

When the first router is the master router and the second router is the backup router, the count of first AS numbers is smaller than the count of second AS numbers.

Further, a protocol used by the first route message and the second route message is IGP protocol.

The first route priority is a first Cost attribute of the first route message.

The second route priority is a second Cost attribute of the second route message.

The forwarding route selecting unit is specifically configured to select a route corresponding to a higher Cost attribute between the first Cost attribute and the second Cost attribute as the forwarding route.

When the first router is the master router and the second router is the backup router, the first Cost attribute is higher than the second Cost attribute.

FIG. 7 illustrates a specific implementation of obtaining a fault between a remote router and a network device connected to the remote router by the remote router by means of VRRP protocol. In FIG. 7, a provider edge device (Provider Edge, PE) 1, a PE2, a PE3, a PE4, a customer edge device (Customer Edge, CE) 1, and a CE2 are routers or network devices with a routing function. A switch (Switch, SW) 1, an SW2, and an SW3 are switches or network devices with a switching function. Details are as follows:

The PE1 and the PE2 form a router backup group by means of VRRP protocol, where the PE1 is a master router and the PE2 is a backup router. The PE1 can monitor states of all interfaces (including an interface at the left side of the PE1 directly connected to the SW1); when a monitored interface fails, a priority of the PE1 is automatically decreased by a certain value; when the priority of the PE1 is lower than a priority of the PE2, the PE2 serves as the master router. Therefore, when an interface from the PE1 to the SW1 fails, the PE1 serves as the backup router, while the PE2 serves as the master router. A priority of a route to the CE1 which is advertised by the PE2 to the neighboring router PE3 is higher than a priority of a route to the CE1 which is advertised by the PE1 to the PE3.

Evidently, by using the router provided in the embodiment of the present invention, it may be ensured that a provider edge device can timely sense a fault between a remote provider edge device and a customer edge device connected to the remote provider edge device.

A person of ordinary skills in the art may understand that, all or a part of the steps of the foregoing method embodiments may be implemented by a program instructing relevant hardware. The foregoing programs may be stored in a computer readable storage medium. When the program runs, the foregoing steps included in the method embodiments are performed. The foregoing storage medium includes various mediums capable of storing program codes, such as a ROM, a RAM, a magnetic disk or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that they may still make modifications to the technical solutions described in the foregoing embodiments, or make equivalent replacements to some technical features thereof, without departing from the idea and scope of the technical solutions of the embodiments of the present invention.

## Claims

1. A route updating method, comprising:
receiving a first route message to a first destination which is advertised by a first router, wherein the first route message comprises a first route priority;
receiving a second route message to the first destination which is advertised by a second router, wherein the second route message comprises a second route priority; and
selecting a route corresponding to a higher route priority between the first route priority and the second route priority as a forwarding route;
wherein, the first router and the second router form a router backup group by means of virtual router redundancy protocol VRRP protocol; under a condition that the first router is a master router and the second router is a backup router, the first route priority is higher than the second route priority.

2. The route updating method according to claim 1, wherein:
a protocol used by the first route message and the second route message is border gateway protocol BGP protocol;
the first route priority is a first Local_Pref attribute of the first route message;
the second route priority is a second Local_Pref attribute of the second route message; and
the selecting a route corresponding to a higher route priority between the first route priority and the second route priority as a forwarding route specifically comprises:
selecting a route corresponding to a higher Local_Pref attribute between the first Local_Pref attribute and the second Local_Pref attribute as the forwarding route;
wherein, under a condition that the first router is the master router and the second router is the backup router, the first Local_Pref attribute is higher than the second Local_Pref attribute.

3. The route updating method according to claim 1, wherein:
a protocol used by the first route message and the second route message is BGP;
the first route priority is a first autonomous system path AS_Path attribute of the first route message;
the second route priority is a second AS_Path attribute of the second route message; and
the selecting a route corresponding to a higher route priority between the first route priority and the second route priority as a forwarding route specifically comprises:
selecting a route corresponding to a smaller count of AS numbers between a count of first autonomous system AS numbers of the first AS_Path attribute and a count of second AS numbers of the second AS_Path attribute as the forwarding route;
wherein, under a condition that the first router is the master router and the second router is the backup router, the count of the first AS numbers is smaller than the count of the second AS numbers.

4. The route updating method according to claim 2, wherein:
the first route priority further comprises a first AS_Path attribute of the first route message;
the second route priority further comprises a second AS_Path attribute of the second route message; and
the selecting a route corresponding to a higher route priority between the first route priority and the second route priority as a forwarding route further comprises:
under a condition that the first Local_Pref attribute is equal to the second Local_Pref attribute, selecting a route corresponding to a smaller count of AS numbers between a count of first autonomous system AS numbers of the first AS_Path attribute and a count of second AS numbers of the second AS_Path attribute as the forwarding route;
wherein, under a condition that the first router is the master router and the second router is the backup router, the count of first AS numbers is smaller than the count of second AS numbers.

5. The route updating method according to claim 1, wherein:
a protocol used by the first route message and the second route message is interior gateway protocol IGP protocol;
the first route priority is a first cost Cost attribute of the first route message;
the second route priority is a second Cost attribute of the second route message; and
the selecting a route corresponding to a higher route priority between the first route priority and the second route priority as a forwarding route specifically comprises:
selecting a route corresponding to a higher Cost attribute between the first Cost attribute and the second Cost attribute as the forwarding route;
wherein, under a condition that the first router is the master router and the second router is the backup router, the first Cost attribute is higher than the second Cost attribute.

6. The route updating method according to claim 5, wherein:
the IGP is an open shortest path first OSPF protocol or an intermediate system to intermediate system routing protocol IS-IS protocol.

7. A router, comprising:
a route message receiving unit, configured to receive a first route message to a first destination which is advertised by a first router, wherein the first route message comprises a first route priority, and receive a second route message to the first destination which is advertised by a second router, wherein the second route message comprises a second route priority; and
a forwarding route selecting unit, configured to select a route corresponding to a higher route priority between the first route priority and the second route priority as a forwarding route;
wherein, the first router and the second router form a router backup group by means of VRRP protocol; under a condition that the first router is a master router and the second router is a backup router, the first route priority is higher than the second route priority.

8. The router according to claim 7, wherein:
a protocol used by the first route message and the second route message is BGP protocol;
the first route priority is a first Local_Pref attribute of the first route message;
the second route priority is a second Local_Pref attribute of the second route message; and
the forwarding route selecting unit is specifically configured to select a route corresponding to a higher Local_Pref attribute between the first Local_Pref attribute and the second Local_Pref attribute as the forwarding route;
wherein, under a condition that the first router is the master router and the second router is the backup router, the first Local_Pref attribute is higher than the second Local_Pref attribute.

9. The router according to claim 7, wherein:
a protocol used by the first route message and the second route message is BGP protocol;
the first route priority is a first AS_Path attribute of the first route message;
the second route priority is a second AS_Path attribute of the second route message; and
the forwarding route selecting unit is specifically configured to select a route corresponding to a smaller count of AS numbers between a count of first AS numbers of the first AS_Path attribute and a count of second AS numbers of the second AS_Path attribute as the forwarding route;
wherein, under a condition that the first router is the master router and the second router is the backup router, the count of first AS numbers is smaller than the count of second AS numbers.

10. The router according to claim 8, wherein:
the first route priority further comprises a first AS_Path attribute of the first route message;
the second route priority further comprises a second AS_Path attribute of the second route message; and
the forwarding route selecting unit is further configured to select a route corresponding to a smaller count of AS numbers between a count of first AS numbers of the first AS_Path attribute and a count of second AS numbers of the second AS_Path attribute as the forwarding route under a condition that the first Local_Pref attribute is equal to the second Local_Pref attribute;
wherein, under a condition that the first router is the master router and the second router is the backup router, the count of first AS numbers is smaller than the count of second AS numbers.

11. The router according to claim 7, wherein:
a protocol used by the first route message and the second route message is IGP protocol;
the first route priority is a first Cost attribute of the first route message;
the second route priority is a second Cost attribute of the second route message; and
the forwarding route selecting unit is specifically configured to select a route corresponding to a higher Cost attribute between the first Cost attribute and the second Cost attribute as the forwarding route;
wherein, under a condition that the first router is the master router and the second router is the backup router, the first Cost attribute is higher than the second Cost attribute.
